# EUROPEAN PATENT APPLICATION

(11) **EP 1 783 875 A1**
(43) Date of publication of application: **09.05.2007**
(21) Application number: 05768595.0
(22) Date of filing: 03.08.2005
(51) Int. Cl.: H02G 11/00, B60R 16/02, H01B 7/00

(54) **ELECTRIC POWER SUPPLY DEVICE FOR LONG SLIDE**

(30) Priority: 06.08.2004 JP 2004230590
(71) Applicant: YAZAKI CORPORATION, Minato-ku Tokyo 108-8333 (JP)
(72) Inventor: Tsubaki, Akira, Shizuoka 4101194 (JP)
(74) Representative: Viering, Jentschura & Partner
(86) International application number: PCT/JP2005/014193
(87) International publication number: WO 2006/013885

(57) **Abstract**

An object of the present invention is to provide a smooth and secure sliding operation for a sliding structure for long slide without drooping and bending a wire harness. A power supply apparatus 1 for long slide includes a case 2 for receiving a wire harness 3 folded back in a U shape, a slider 6 slidably engaged with the case 2 for holding one end (movable end) of the wire harness 3, a pulley 4 rotatably engaged with an inner surface of a turn-around portion 3b of the wire harness 3, and a compression coil spring 7 for resiliently urging the pulley 4 in a direction opposite to a return direction of the wire harness. The pulley 4 is rotatably connected with a support portion 27 and the support portion 27 is slidably engaged with the case 2 and a compression coil spring 7 is resiliently abutted on the support portion. A support rod 36 is inserted into one end of the compression coil spring 7 and the other end of thereof is received into a pair of guide walls 37. The support rod is positioned inside the guide walls when the compression coil spring is most compressed.

## Description

### Technical Field

The present invention relates to a power supply apparatus disposed in a long sliding structure such as a sliding door or sliding seat of a motor vehicle. The power supply apparatus receives a long wire harness folded in a U shape to prevent bending of the long wire harness.

### Related Art

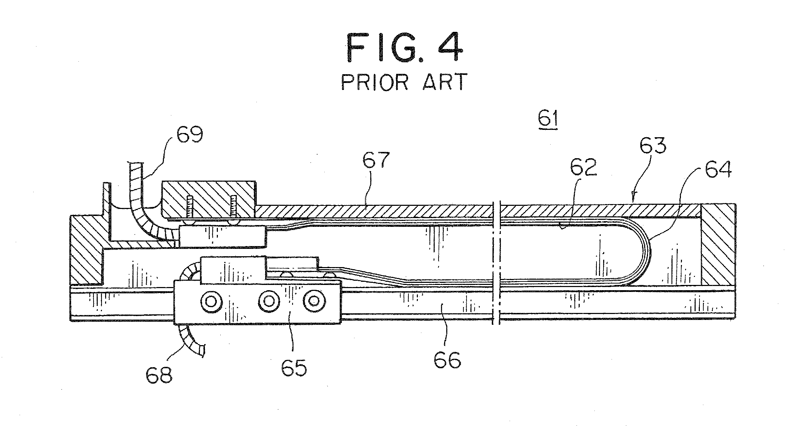

FIG. 4 shows a conventional power supply apparatus (JP,H11-342807,A).

The conventional power supply apparatus 61 is disposed in a sliding door of a motor vehicle. The power supply apparatus 61 includes an elongate case 63 for receiving a flat wire harness 62 folded in a U shape, a flexible reinforcing plate 64 disposed on an outer surface of the wire harness 62, a slider 65 disposed on a movable end of the wire harness 62, and a rail 66 slidably engaging with the slider 65.

The reinforcing plate 64 is formed with a thin steel and is held by a magnetized wall 67 of the case 63 and holds the flat wire harness 62. The movable end of the flat wire harness 62 is connected to a wire harness 68 of a vehicle body at the slider 65 and a fixed end thereof is connected to a wire harness 69 of the sliding door.

The slider 65 moves back and forth on the rail 66 as the sliding door is closed and opened. The flat wire harness 62 moves back and forth with the slider 65 and keeps the U shape to absorb a stroke of closing and opening of the sliding door. An electric power and signal are thereby supplied to auxiliary devices of the sliding door from the vehicle body.

The conventional power supply apparatus 61 utilizes the flat wire harness 62 so that a number of circuitries and a current supplied are limited. The magnetized wall 67 for holding the steel reinforcing plate 64 has a complicated structure resulting to high cost.

It is disclosed that a power supply apparatus (not shown) utilizing a wire harness with a circular or oval section prevents drooping of the wire harness with a rigidity thereof.

The power supply apparatus is adapted to a short slide stroke but not to a long slide stroke. FIGS. 5-7 show a power supply apparatus 71 adapted to a long sliding door or long sliding seat of a motor vehicle. The power supply apparatus 71 has an elongate case 74 and a slider 73. As shown in FIGS. 6 and 7, as a sliding structure such as the sliding door and sliding seat moves, a wire harness 72 disposed in the case 74 droops down and bends severalfold and stops the further movement of the slider 73.

### Disclosure of the Invention

An object of the present invention is to provide a power supply apparatus for a long sliding structure, such as a long sliding door and long sliding seat, for enabling a smooth sliding operation without drooping and bending a wire harness.

According to a first object of the present invention, a power supply apparatus for long slide includes a case for receiving a wire harness folded back in a U shape; a slider slidably engaged with the case for holding a movable end of the wire harness; a pulley rotatably engaged with an inner surface of a turn-around portion (bent portion) of the wire harness; and a compression coil spring for urging the pulley in a direction opposite to a return direction of the wire harness.

When the slider is positioned in a front end portion of the case and the compression coil spring is most compressed, the pulley is pressed toward a rear end portion of the case with urging force of the compression coil spring so that the wire harness is stretched with the pulley without drooping. As the sliding structure is moved rearward with a sliding operation, an upper portion (forward portion) of the wire harness becomes shorter and a lower portion (return portion) thereof becomes longer. The compression coil spring resiliently urges the pulley toward the rear end portion of the case so that the upper portion of the wire harness is stretched between the slider and the pulley, and the lower portion thereof is stretched between the case and the pulley. The pulley rotates together with the wire harness with low friction responsive to expansion and contraction of the wire harness due to movement of the slider. The wire harness is always stretched rearward with the compression coil spring without drooping and bending during movement of the slider so that the slider can move smoothly rearward and forward without jamming.

Preferably, the pulley is rotatably connected with a support portion and the support portion is slidably engaged with the case and the compression coil spring is resiliently abutted on the support portion.

Accordingly, the support portion is positioned with the case and slid along the case. One end of the compression coil spring resiliently abuts on the support portion without displacement so that the pulley moves rearward and forward in the case together with the support portion without displacement.

Preferably, the support portion has a support rod projecting therefrom, the support rod is inserted into one end of the compression coil spring, and the other end of thereof is received into a pair of guide walls when the compression coil spring is most compressed.

Thereby, the one end of the compression coil spring is supported with the support rod of the support portion and the other end thereof is stably supported with the pair of the guide walls. The pair of the guide walls are covered with a base wall and a cover of the case at both sides thereof to define a receiving chamber having a rectangular tube shape. When the slider is positioned in a front end portion of the case, and the compression coil spring is most compressed and received in the pair of the guide walls, the support rod is positioned in the compression coil spring and the guide walls. The compression coil spring stretches as the slider moves rearward and most stretches at a rear end portion of the case. The support rod stably positions the one end of the compression coil spring during stretching and the pair of the guide walls hold and position the other end of the compression coil spring.

Preferably, the power supply apparatus further includes a circular shaped guide plate facing the pulley, wherein the turn-around portion is positioned between the pulley and the guide plate.

Accordingly, the turn-around portion of the wire harness is interposed between the pulley and the guide plate and slidably engages therewith. The guide plate prevents separation of the wire harness from the pulley and keeps the bent portion contact with the pulley.

Preferably, the case has a narrow portion and a wide portion, the wide portion has the pulley and the compression coil spring, and the movable end of the wire harness is positioned in the narrow portion when the compression coil spring is most compressed.

Accordingly, an inner surface of the narrow portion of the wire harness supports the movable wire harness end. Cooperative operation of the compression coil spring and the inner surface of the narrow portion thereby prevents the drooping and bending of the wire harness, even when the movable wire harness end tends to droop or bend. The narrow portion and the wide portion expand the whole length of the case for easily achieving long slide of the wire harness.

### Brief Description of the Drawings

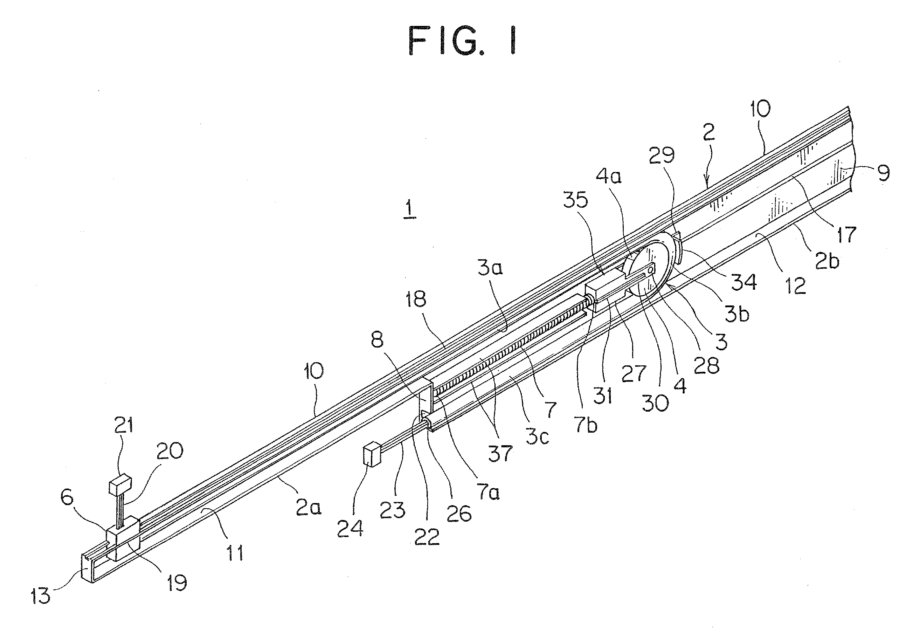

FIG. 1 shows a perspective view of an embodiment of a power supply apparatus for long slide of the present invention with a slider positioned close to a front wall of a case;

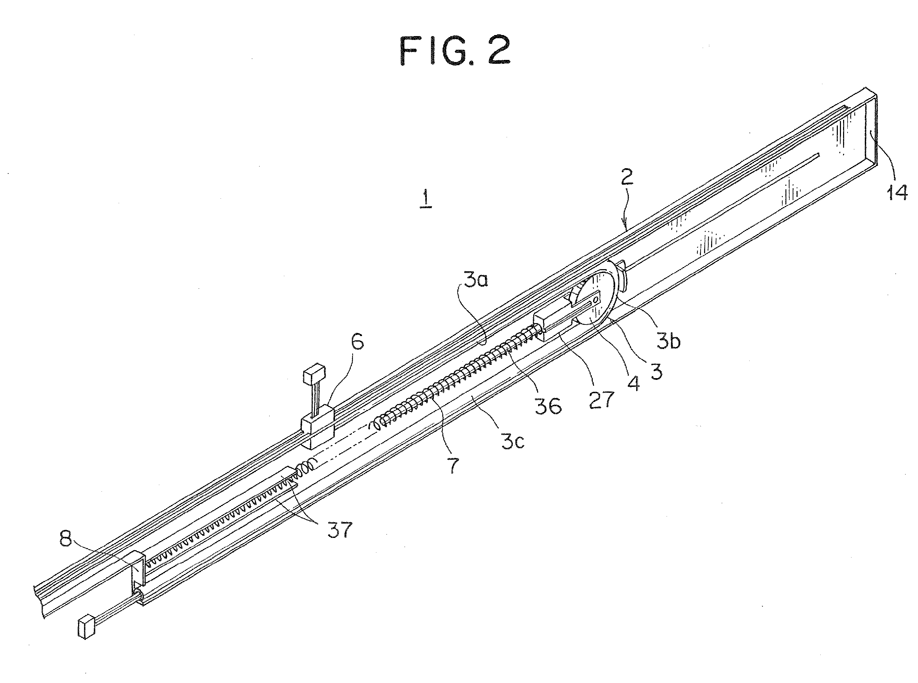

FIG. 2 shows a perspective view of the power supply apparatus with the slider positioned in a middle point of the case;

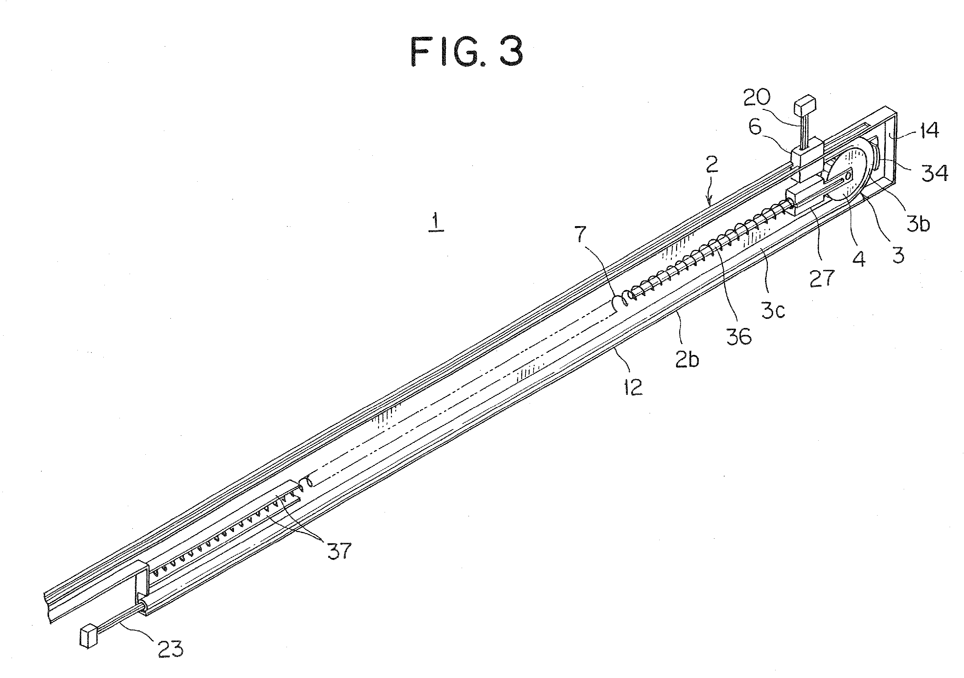

FIG. 3 shows the power supply apparatus with the slider positioned close to a rear wall of the case;
FIG. 4 is a sectional view of an embodiment of a conventional power supply apparatus;

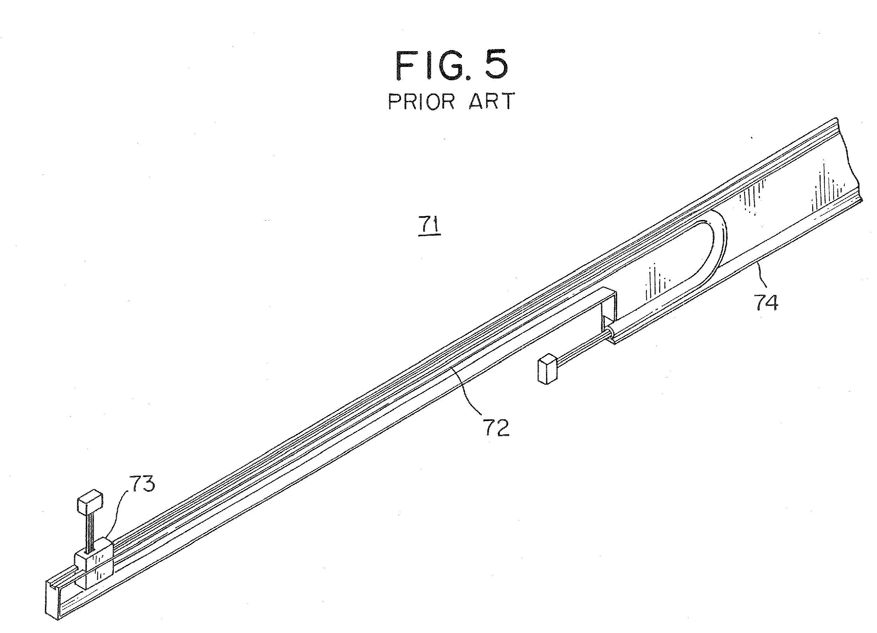

FIG. 5 is a perspective view of a conventional power supply apparatus for long slide;

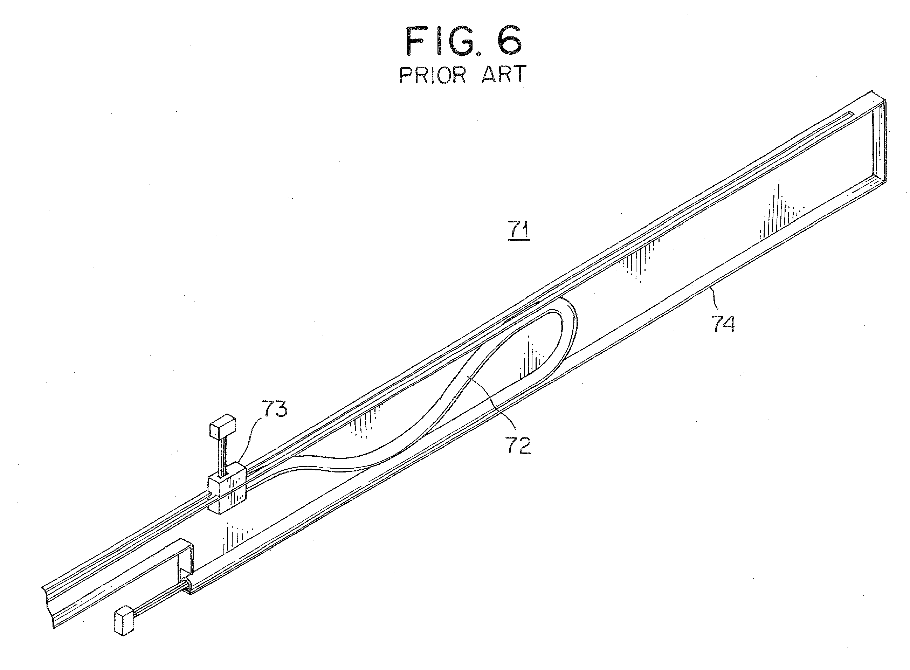

FIG. 6 is a perspective view showing a problem of the conventional power supply apparatus for long slide; and

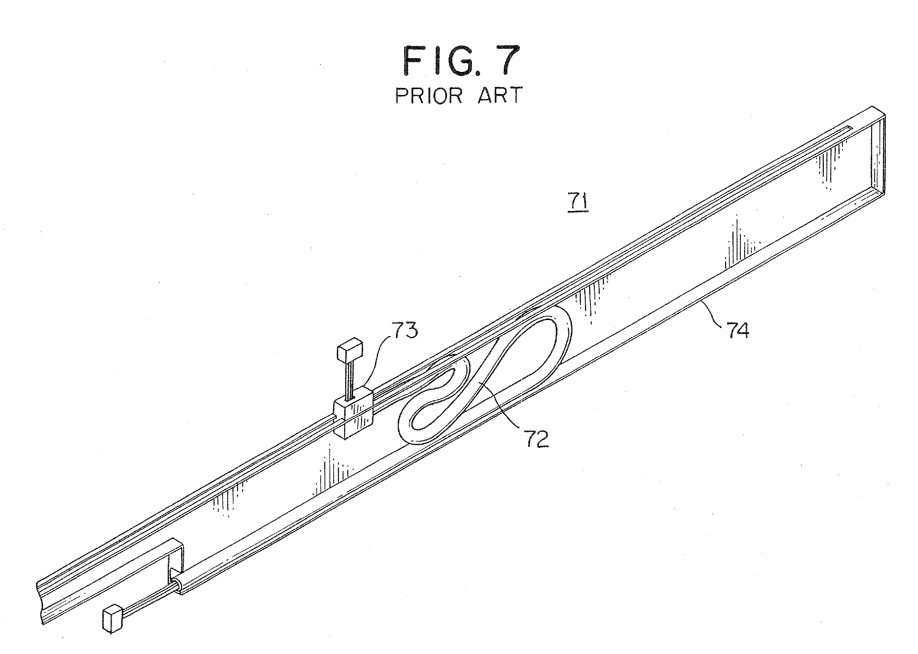

FIG. 7 is a perspective view showing a problem of the conventional power supply apparatus for long slide.

### Best Mode for Carrying out the Invention

FIGS. 1-3 show an embodiment of a power supply apparatus for long slide of the present invention.

The power supply apparatus 1 for long slide includes an elongate case 2, which has a narrow portion 2a and a wide portion 2b along a longitudinal direction thereof, a wire harness 3 with a circular or oval section, which is arranged in the case 2 and bent in a U or J shape, a slider 6 slidably disposed on the case 2, which holds one end (movable end) of the wire harness 3 and slides on the case 2 along the longitudinal direction of the case 2, a pulley 4 slidably engaging with an inner surface of a bent portion (turn-around portion) 3b of the wire harness 3 for holding the wire harness 3, and a compression coil spring 7 for resiliently urging the pulley 4 in a direction (extending direction of the wire harness 3) opposite to a return direction of the wire harness 3 to stretch the wire harness 3 in the case 2 without droop or bent thereof.

The case 2 made of a synthetic resin or metal includes a main body 2 (same reference number as the case) and a plate shaped cover (not shown). The main body 2 includes the narrow portion 2a and the wide portion 2b intervened with a step portion 8. The narrow portion 2a is shorter than the wide portion 2b. The cover (not shown) covers a front opening of the main body 2 and is fastened to the main body 2 with a locking means or fastener.

The main body 2 has a base wall 9, an upper wall 10, lower walls 11 and 12, a front wall 13, and a rear wall 14, upstanding from the base wall 9. The base wall 9 extends over the narrow and wide portions 2a and 2b. The base wall 9 and the cover each have a guide portion 17, elongate groove or bore, extending in a longitudinal direction thereof at the center of a width of the wide portion 2b. The guide portion 17 slidably supports a support portion 27 supporting the pulley 4.

As shown in FIG. 1, the upper wall 10 of the main body 2 has a slit-shaped guide portion 18 for slidably guiding the slider 6. A groove 19 formed at a midpoint of a height of the slider 6 slidably engages with the guide portion 18. An upper half portion of the slider 6 is exposed outside from the main body 2 and a lower half portion thereof is disposed inside the narrow portion 2a of the main body 2. The wire harness 3 is bent in a L shape at the slider 6 and forms a movable wire harness end 20, which passes through the slider 6 and is connected with a connector 21. The meanings of upper, lower, front, and rear of the specification do not necessary mean the direction of the power supply apparatus 1 in use.

The narrow portion 2a of the main body 2 has the lower wall 11 joined to the step portion 8, the front wall 13, and the upper wall 10. The wide portion 2b of the main body 2 has the lower wall 12, a front wall (step portion 8), the rear wall 14 (FIG. 2), the base wall 9, and the upper wall 10. The base wall 9 and the upper wall 10 extend over the narrow and wide portions 2a and 2b.

As seen in FIG. 1, when the slider 6 is positioned close to the front wall 13, the wire harness 3 extends from a front end to the pulley 4 along an inner surface of the upper wall 10, is turned around at an outer surface of the pulley 4, is arranged along an inner surface of the lower wall 12, and is led outside through an opening 22 of the step portion 8.

The wire harness 3 has a corrugated tube 26 made of a synthetic resin for protecting a plurality of insulated electrical wires. The corrugated tube 26 has alternating annular ridges and grooves around the tube and is well flexible. A net tube is also possible for use in place of the corrugated tube 26 and the plurality of the electrical wires bound with a tape without the protection tube is also possible for use.

The pulley 4 is made of a synthetic resin, and has circular disks at both sides and annular outer surface 4a. The pulley 4 has a diameter a little less than an inner width between the upper wall 10 and the lower wall 12 by twice of the diameter of the wire harness 3. A width of the outer surface 4a (thickness of the pulley) is almost same as the diameter of the wire harness 3. The outer surface 4a has a section of a circular groove to be engaged with the bent portion 3b of the wire harness 3 without displacement.

The pulley 4 has a central axle 28 rotatably supported with a pair of connection plates 29, 30 disposed at both sides of the support portion 27. The support portion 27 has ribs 31 on outer surfaces of the connection plates 29 and 30. The ribs 31 slidably engage with the guide portions 17 of the case 2 and the cover (not shown) so as to position the support portion 27 and the pulley 4 in the center of the width of the main body 2.

The one connection plate 29 facing to the base wall 9 is longer and wider than the other connection plate 30 facing to the cover. The one connection plate 29 has a circular guide plate 34 perpendicularly upstanding at a distal end thereof. The guide plate 34 is opposed to the outer surface 4a of the pulley 4 and slidably holds the bent portion 3b of the wire harness 3 with the pulley 4. The guide plate 34 always makes the bent portion 3b contact with the outer surface 4a of the pulley 4 for preventing displacement of the bent portion 3b of the wire harness 3 from the pulley 4. The pulley 4, the support portion 27, the connection plates 29 and 30, and the guide plate 34 form a harness support unit 35.

A support rod 36 projects from a front end of the support portion 27 and is inserted into the compression coil spring 7 through a rear end 7b thereof. A front end 7a of the compression coil spring 7 resiliently abuts on the step portion 8 and the rear end 7b resiliently abuts on the support portion 27.

A pair of parallel guide walls 37 extend inward from the step portion 8 along the base wall 9. An inner width between the guide walls 37 is a little larger than an outer diameter of the compression coil spring 7 and an outer diameter of the support rod 36 is a little smaller than an inner diameter of the compression coil spring 7. When the compression coil spring 7 is most compressed, the support rod 36 is received between the pair of the guide walls 37, as shown in FIG. 1. The support rod 36 has a length equal or less than a length of the most compressed coil spring 7 and approximately equal to the length of the pair of the guide walls 37.

When the slider 6 is positioned close to the front wall 13, the compression coil spring 7 is most compressed in the pair of the guide walls 37. The most compressed coil spring 7 is received in a tube shaped chamber defined by the guide walls 37, the base wall 9, and the cover (not shown). The support potion 27 becomes adjacent to rear ends of the guide walls 37 and the pulley 4 is positioned less than a middle point of the length of the wide portion 2b with about the step portion 8. The compression coil spring 7 urges the wire harness 3 through the pulley 4 toward the rear wall 14 so that an upper portion 3a (forward portion) and a lower portion 3c (return portion) of the wire harness 3 are stretched along the upper wall 10 and the lower wall 12 of the case 2.

A front half of the upper portion 3a is adjacent to the lower wall 11 of the narrow portion 2a so that the front half thereof is supported with the lower wall 11 without drooping. A length of the narrow portion 2a can be adjusted to any sliding length of the slider 6.

When a sliding structure (not shown) such as a sliding door or sliding seat is slid, the slider 6 moves rearward together with the upper portion 3a of the wire harness 3. The compression coil spring 7 expands gradually and concurrently urges the pulley 4 in a moving direction of the slider 6. The stretching force of the compression coil spring 7 stretches the upper portion 3a of the wire harness 3 without drooping so that the slider 6 smoothly moves without jamming. As the compression coil spring 7 stretches, the support rod 36 separates from the guide walls 37 and moves together with the pulley 4.

As the upper portion 3a of the wire harness 3 further moves rearward, the lower portion 3c thereof is gradually extended such that the lower portion 3c is stretched rearward through the pulley 4 with the urging force (stretching force) of the compression coil spring 7. When the slider moves to the step portion 8 of the case 2, both the upper and lower portions 3a and 3c have almost the same length.

As clearly seen from FIGS. 2 and 3, the power supply apparatus 1 can be utilized when it is upside down. The compression coil spring 7 pushes rearward the pulley 4 and the pulley 6 pushes rearward the wire harness 3 so that the lower portion 3c (upper portion when upside down) is stretched without drooping.

When the slider 6 reaches close to the rear wall 14 as seen in FIG. 3, the upper portion 3a becomes shortest and the lower portion 3c becomes longest and extends along the lower wall 12 of the case 2. Both the guide plate 34 adjacent to the pulley 4 and the bent portion 3b of the wire harness 3 are positioned close to the rear wall 14 of the case 2. The compression coil spring 7 still stretches the lower portion 3c of the wire harness 3 by urging rearward the pulley 4 even when the slider 6 is positioned close to the rear wall 14.

When the slider 6 is moved in a reverse direction (forward direction) from the position of FIG. 3, the upper portion 3a becomes longer and the compression coil spring urges the wire harness 3 through the pulley 4 in a direction opposite to the moving direction of the slider 6. The upper portion 3a and the lower portion 3c of the wire harness 3 are stretched without drooping when the slider 6 is positioned in the middle point of the power supply apparatus 1 so that the slider 6 smoothly moves without jamming.

The bent portion 3b of the wire harness 3 and the pulley 4 move a half of the moving distance of the slider 6. The positions of the slider 6, the bent portion 3b, and the pulley 4 have a linear relation (proportional) among them. Contrary to this, the position of the center of the upper portion 3a in the wide portion 2b of the case 2, or the droopiest position, varies in a quadratic function manner. The compression coil spring 7 always stretches or urges the bent portion 3b of the wire harness 3 through the pulley 4 in the case 2 so that the droop or bent of the wire harness 3 is assuredly prevented.

It is noticed that the drooping of the upper portion of the wire harness occurs when the power supply apparatus is mounted either vertically or horizontally so that the bending of the wire harness has a broad meaning including the drooping.

FIGS. 1 and 3 show the sliding structure (not shown) such as the sliding door or sliding seat positioned at a forward end and rearward end, respectively. When the power supply apparatus 1 is mounted vertically in the sliding door, the movable wire harness end 20 led from the slider 6 is connected to the vehicle body through a step space and a harness 23 led from the case 2 is fixed to the sliding door and connected to a wire harness or auxiliary units. FIG. 1 shows the left side sliding door fully closed, FIG. 2 shows an intermediate state, and FIG. 3 shows the sliding door fully opened.

When the power supply apparatus 1 is adopted to the sliding seat and disposed on a floor panel of the vehicle body, the movable wire harness end 20 led from the slider 6 is connected to a wire harness or auxiliary units of the sliding seat and the harness 23 led from the case 2 is connected to the wire harness of the vehicle body. FIG. 1 shows the sliding seat in a front end position (or rear end position), FIG. 2 shows the sliding seat in the intermediate position, and FIG. 3 shows the sliding seat in the rear end position (or front end position). When the power supply apparatus 1 is horizontally mounted to the vehicle body, the movable wire harness end 20 led from the slider 6 is arranged in the sliding seat by bending in a direction of a thickness of the case 2 (upward direction).

In the above embodiment, the long hole or long groove as the guide portion 18 for the slider 6 can be disposed on the base wall 9 and the cover instead of the upper wall 10 of the case 2, and a projection or a rib engaging with the guide portion 18 can be disposed on the slider 6. The movable wire harness end 20 can be led outside from the elongate guide portion 17 disposed on the cover or base wall 9 or from the guide portion 18 disposed on the upper wall 10 of the case 2. The guide plate 34 facing the pulley 4 can be replaced with a plurality of small rollers (not shown) circularly disposed.

The narrow portion 2a of the front half of the case 2 can be the wide portion 2b and have the same lower wall as the wide portion 2b. In this instance, the opening 22 is disposed on the lower wall or the front wall. If the stroke of the sliding structure is a little shorter, the narrow portion 2a can be deleted and the only wide portion 2b is utilized for long slide.

### Industrial Applicability

According to the present invention, the compression coil spring always pushes the wire harness through the pulley in the direction opposite to the return direction of the wire harness and the wire harness is always stretched in the case without bending so that the sliding structure smoothly slides for long slide and provides a reliable power supply.

According to the present invention, the support portion properly positions the pulley and the compression coil spring in the case so that the wire harness is always resiliently urged. The sliding structure thereby smoothly slides for long slide and provides the reliable power supply.

According to the present invention, each end of the long compression coil spring responsive to long slide is supported with the support rod and the guide walls when the coil spring is stretched and compressed, respectively, so that the compression coil spring assuredly pushes the pulley. The sliding structure thereby smoothly slides for long slide and provides the reliable power supply.

According to the present invention, the urging force of the compression coil spring and the guide plate always keep the pulley contact with the wire harness even a fast slide operation so that the wire harness is stretched without drooping. The sliding structure thereby smoothly slides for long slide and provides the reliable power supply.

According to the present invention, the narrow portion of the case supports the wire harness therein so that the entire length of the case becomes longer and enable the power supply apparatus to slide long.

## Claims

1. A power supply apparatus for long slide comprising:
a case for receiving a wire harness folded back in a U shape;
a slider slidably engaged with the case for holding a movable end of the wire harness;
a pulley rotatably engaged with an inner surface of a turn-around portion of the wire harness; and
a compression coil spring for urging the pulley in a direction opposite to a return direction of the wire harness.

2. The power supply apparatus as claimed in claim 1, wherein the pulley is rotatably connected with a support portion and the support portion is slidably engaged with the case and the compression coil spring is resiliently abutted on the support portion.

3. The power supply apparatus as claimed in claim 2, wherein the support portion has a support rod projecting therefrom, the support rod being inserted into one end of the compression coil spring, the other end thereof being received into a pair of guide walls when the compression coil spring is most compressed.

4. The power supply apparatus as claimed in any one of claims 1-3, further comprising a circular shaped guide plate facing the pulley, wherein the turn-around portion of the wire harness is positioned between the pulley and the guide plate.

5. The power supply apparatus as claimed in any one of claims 1-4, wherein the case has a narrow portion and a wide portion, the wide portion having the pulley and the compression coil spring, the movable end of the wire harness being positioned in the narrow portion when the compression coil spring is most compressed.
